# FASCICULE DE BREVET EUROPEEN

(11) **EP 1 622 065 B1**
(45) Date de publication et mention de la délivrance du brevet: **27.05.2009**
(21) Numéro de dépôt: 05300482.6
(22) Date de dépôt: 16.06.2005
(51) Int. Cl.: G06K 9/20, G06K 9/68

(54) **Procédé pour la détection de filantes**
Verfahren zur Erkennung von Massendrucksachen
Method of detecting serial letters

(30) Priorité: 20.07.2004 FR 0451591
(43) Date de publication de la demande: 01.02.2006
(73) Titulaire: Solystic, 94257 Gentilly Cedex (FR)
(72) Inventeur: Letombe, Mathieu, 75014 Paris (FR); Benyoub, Belkacem, 91120 Palaiseau (FR)
(74) Mandataire: Prugneau, Philippe

(56) Documents cités:
- WO-A-00/48119
- DE-A- 10 150 464
- DE-C- 19 836 767
- US-B1- 6 292 709
- PALUMBO P W ET AL: "POSTAL ADDRESS BLOCK LOCATION IN REAL TIME" COMPUTER, IEEE COMPUTER SOCIETY, LONG BEACH., CA, US, US, vol. 25, no. 7, 1 juillet 1992 (1992-07-01), pages 34-42, XP000307118 ISSN: 0018-9162
- PYEOUNG-KEE KIM: "Automatic text location in complex color images using local color quantization" TENCON 99. PROCEEDINGS OF THE IEEE REGION 10 CONFERENCE CHEJU ISLAND, SOUTH KOREA 15-17 SEPT. 1999, PISCATAWAY, NJ, USA,IEEE, US, vol. 1, 15 septembre 1999 (1999-09-15), pages 629-632, XP010368256 ISBN: 0-7803-5739-6

## Description

L'invention concerne un procédé de traitement d'envois postaux dans lequel on forme une image numérique de chaque envoi postal comportant une information d'adresse et on réalise à partir de l'image de l'envoi postal une opération de reconnaissance automatique d'adresse par OCR.

L'invention concerne plus particulièrement un procédé de traitement d'envois postaux permettant de détecter des filantes. Une filante est typiquement une succession ou un groupe d'envois postaux homogènes, souvent en très grand nombre, présentant des caractéristiques physiques visibles identiques. Les envois postaux d'une filante proviennent d'un même émetteur de courrier et sont adressés à des destinataires différents. On a l'habitude de parler pour ces envois postaux "d'envois gros usager" ou encore "d'envois client référencé".

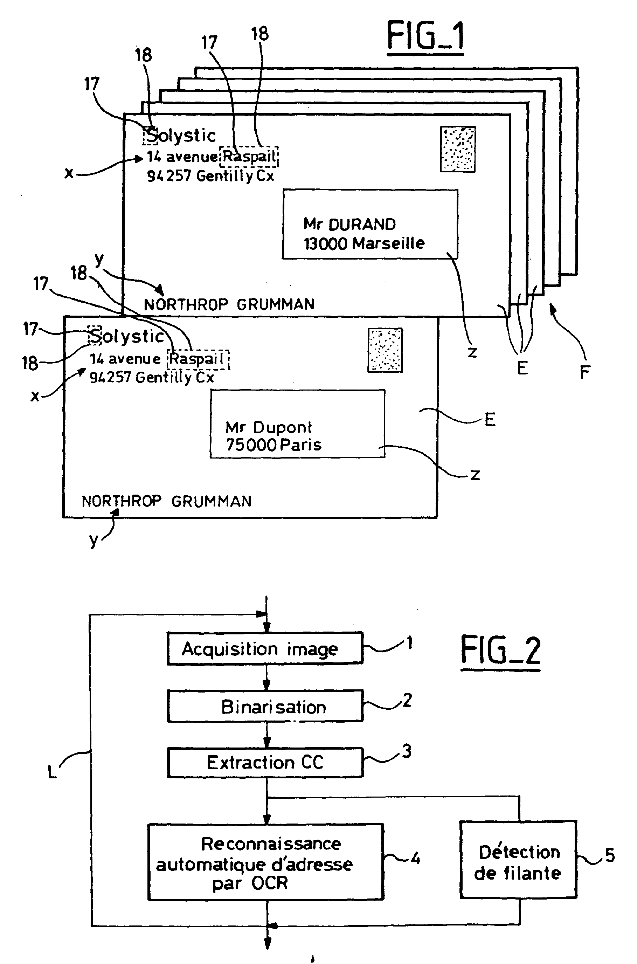

Sur la figure 1, on a illustré de façon très schématique les envois postaux E d'une filante F. Sur la figure 1, on a fait apparaître de façon plus précise deux envois postaux E dont on voit la face avant comportant des informations d'adresse. Les deux envois postaux E comportent pareillement en haut à gauche le nom et l'adresse de l'expéditeur indiqué par la référence x, en bas à gauche le nom du groupe (indiqué par la référence y) auquel appartient l'expéditeur et au centre légèrement décalé sur la droite un bloc adresse indiqué par la référence z, ce bloc d'adresse étant ici disposé dans un encadré sous plastique. Tous les envois postaux E de cette filante F sont constitués de la même manière et comportent chacun les éléments x, y, z caractéristiques de la filante F placés aux même positions sur la face avant des envois. Uniquement l'adresse du destinataire dans le bloc z de l'envoi postal E change d'un envoi postal E à l'autre de la filante F, comme on peut le voir sur la figure 1.

Actuellement, les filantes sont identifiées visuellement par les opérateurs au moment ou ils alimentent en envois postaux les machines de tri.

Plus particulièrement, lorsqu'un opérateur a identifié une filante, il peut ajuster manuellement les paramètres du processus automatique de reconnaissance par OCR de l'adresse du destinataire sur la machine de tri. Mais souvent, ce paramétrage n'est pas optimal et n'est pas utilisé car il nécessite une expertise dans l'utilisation de l'OCR que ne possède généralement pas l'opérateur. Quand l'opérateur possède l'expertise nécessaire à ce paramétrage manuel, ce dernier n'est pratiqué généralement que sur de très grosses filantes c'est à dire des filantes composées de milliers d'envois postaux, car sa mise en oeuvre nécessite des manipulations de mesures, d'optimisation et de saisies de données qui ralentissent l'exploitation globale de la machine de tri. L'ajustement des paramètres OCR peut par exemple être effectué de la manière présentée dans le document de brevet européen EP 1 159 705.

DE-198 36 767 décrit un procédé de traitement d'envois postaux dans lequel on exploite un processus de détection de filantes. Ce processus est utilisé pour retourner automatiquement du courrier en nombre à un expéditeur.

Généralement, les envois postaux constituant des filantes sont envoyés aux agences postales par des clients référencés qui bénéficient de contrats de "ristourne". Les contrats de ristourne prévoient une réduction du tarif d'expédition qui est fonction du taux de lecture acheminement et du taux de lecture distribution des adresses par OCR. Généralement, les taux de lecture sont déterminés au moyen de lots tests d'envois postaux au moment de la signature du contrat et ne sont pas vérifiés pendant toute la durée du contrat, du fait que la détermination des taux de lecture est longue à effectuer et donc coûteuse. Aussi, les agences postales n'ont pas de moyen de contrôle du respect des performances spécifiées dans le contrat par les clients référencés.

Le but de la présente invention est de proposer un procédé pour détecter automatiquement des filantes en vue d'un paramétrage automatique du lecteur d'adresse par OCR et d'un contrôle automatique des contrats de ristourne.

A cet effet, l'invention a pour objet un procédé de traitement d'envois postaux tel que défini par la revendication 1.

Selon un mode de mise en oeuvre particulier du procédé selon l'invention, le traitement pour l'identification de filantes comprend une étape consistant à extraire des composantes connexes dans l'image de l'envoi postal.

Ces composantes connexes sont déjà extraites pour effectuer la reconnaissance d'adresse par OCR. Avec le procédé selon l'invention, on utilise donc ces mêmes informations pour détecter des filantes et ainsi ajouter de façon simple une nouvelle fonctionnalité à un processus de tri automatique d'envois postaux.

Avec le procédé selon l'invention, le système de reconnaissance automatique d'adresse par OCR peut être réglé automatiquement à chaque nouvelle identification de filante. De la même manière, avec l'identification automatique de filante selon l'invention, il est possible d'organiser une détermination systématique et automatique du taux de lecture des filantes identifiées pour la gestion des contrats de ristourne dans les agences postales.

Selon un autre mode de mise en oeuvre du procédé selon l'invention, des filantes sont répertoriées dans un catalogue sous la forme d'un ensemble de composantes connexes prédéterminées pour chaque filante. Ainsi, lors du traitement d'un envoi postal courant, on compare les composantes connexes extraites de l'image numérique de l'envoi postal courant avec les composantes connexes prédéterminées des filantes du catalogue pour détecter si l'envoi postal courant fait partie d'une des filantes.

Selon un autre mode de mise en oeuvre du procédé selon l'invention, le traitement pour l'identification de filantes comprend une étape consistant à extraire des attributs d'image multi niveau de gris (MNG) dans l'image de l'envoi postal et les filantes sont répertoriées dans un catalogue sous la forme d'attributs d'image multi niveau de gris prédéterminés pour chaque filante.

Selon un autre mode de mise en oeuvre du procédé selon l'invention, le catalogue contient des paramètres de réglage de l'OCR associés aux filantes, ces paramètres de réglage s 'améliorant automatiquement.

Selon un autre mode de mise en oeuvre du procédé selon l'invention, on identifie un envoi postal courant comme faisant partie d'une filante et on enregistre dans une base de données l'image numérique de l'envoi postal courant avec les résultats de l'opération de reconnaissance d'adresse par OCR en vue d'effectuer un contrôle du taux de lecture pour la filante.

La présente invention s'étend également à une machine de tri postal spécialement agencée pour mettre en oeuvre le procédé défini ci-dessus.

L'invention sera mieux comprise à la lecture de la description qui suit et à l'examen des figures qui l'accompagnent. Cette description n'est donnée qu'à titre d'exemple indicatif et nullement limitatif de l'invention.
La figure 1 est une représentation de deux envois postaux appartenant à une filante.
La figure 2 est un synoptique très général montrant une détection de filante dans le processus de reconnaissance d'adresse par OCR.
La figure 3 est un synoptique du procédé pour détecter une filante selon l'invention.
La figure 4 montre de manière plus détaillée le processus de comparaison des composantes connexes de la figure 3.
La figure 5 montre plus en détail le catalogue de la figure 3.
La figure 6 est un synoptique détaillé des différentes étapes permettant la décision de filante et la détermination d'actions à mener.
La figure 7 est un synoptique très général montrant un autre mode de mise en oeuvre de la détection de filante.
La figure 8 est une représentation schématique de l'extraction d'attributs d'une image multi niveau de gris.

Sur la figure 2, on a représenté de façon très schématique un mode de mise en oeuvre du procédé pour détecter ou identifier automatiquement des filantes selon l'invention dans un processus de reconnaissance automatique d'adresse par OCR.

Le processus de traitement automatique d'un envoi postal dans une machine de tri comprend un traitement de reconnaissance automatique d'adresse par OCR selon lequel on forme une image numérique 1 de la surface de l'envoi postal courant comportant une information d'adresse. On binarise en 2 l'image numérique de l'envoi postal et on dérive en 3 de l'image numérique binarisée des composantes connexes (CC) dont nous verrons la composition de manière plus détaillée ci-dessous. Les composantes connexes CC de l'envoi postal sont alors utilisées pour permettre de localiser le bloc adresse, les lignes et caractères de l'adresse postale et servent à la reconnaissance automatique d'adresse 4 par OCR.

Le procédé selon l'invention utilise aussi les composantes connexes extraites en 3 comme des données propres à distinguer à l'étape 5 un groupe d'envois postaux homogènes ou filante . Comme représenté sur la figure 2, la détection de filante 5 peut être réalisée en parallèle à la reconnaissance automatique d'adresse par OCR de sorte que le processus de traitement se reboucle en L pour chaque envoi postal subséquent avec le résultat de la détection de filante. Les informations obtenues à partir de la détection de filante et de la reconnaissance d'adresse par OCR de l'envoi postal courant sont utilisées lors du processus de traitement par OCR de l'envoi postal subséquent et de la détection de filante associée.

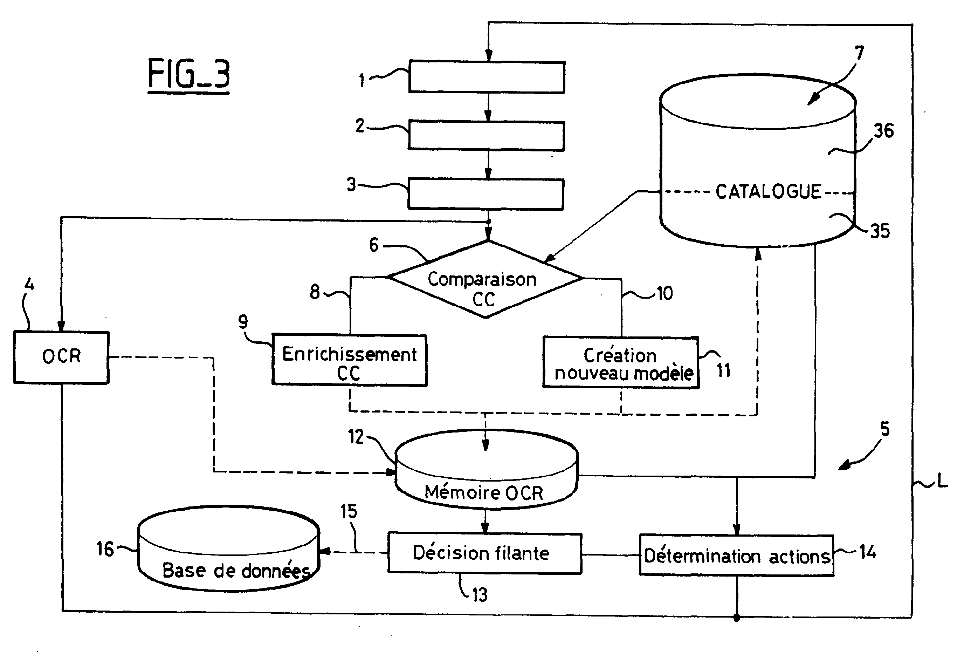

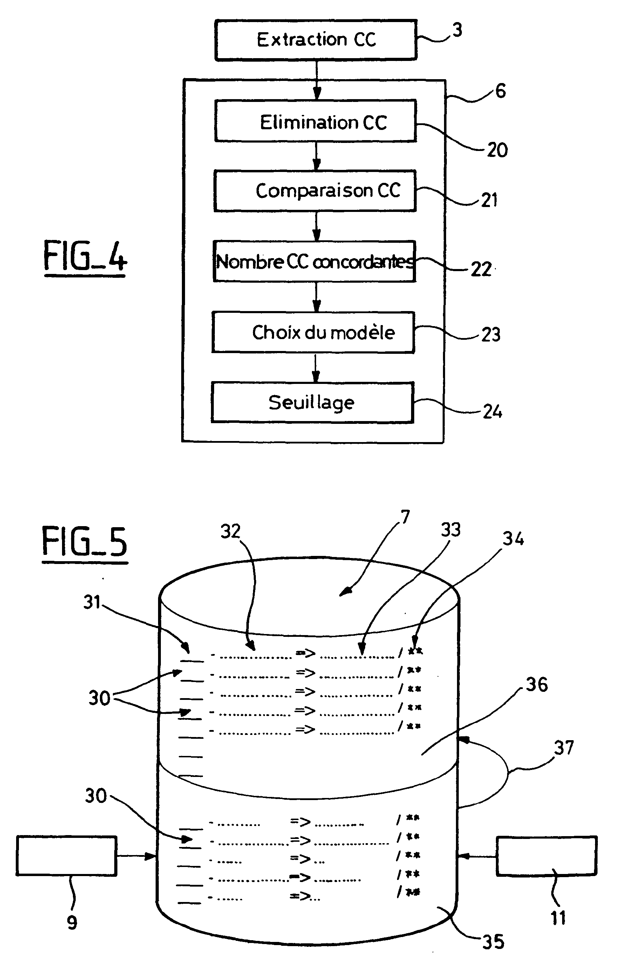

On a représenté sur la figure 3 la détection de filante 5 de la figure 2 de manière plus détaillée qui démarre à partir de l'étape 6. Sur la figure 3, on a représenté également la formation 1 de l'image numérique de la surface de l'envoi postal courant, la binarisation 2 et l'extraction des composantes connexes 3 à partir de cette image numérique. A l'étape 6, on compare les composantes connexes de l'envoi postal courant aux composantes connexes de modèles préalablement enregistrés et répertoriés dans un catalogue dynamique 7 enregistré en mémoire. On appelle modèle un ensemble de composantes connexes prédéterminées qui définissent (caractérisent) une filante. Le processus de comparaison 6 des composantes connexes sera plus détaillé par la suite en référence à la figure 4.

Dans le cas ou l'on trouve en 6 que les composantes connexes de l'envoi postal courant concordent 8 avec les composantes connexes d'un modèle du catalogue, on enrichit 9 le modèle concerné avec les composantes connexes de l'envoi postal courant de manière à consolider la robustesse du modèle. Dans le cas 10 ou l'on trouve au contraire que les composantes connexes de l'envoi postal courant ne concordent avec les composantes connexes d'aucun des modèles du catalogue 7, on crée un nouveau modèle 11 dans le catalogue 7 en écrasant par exemple un modèle ancien, les composantes connexes du nouveau modèle étant alors les composantes connexes de l'envoi postal courant. On peut facilement concevoir d'associer à chaque modèle du catalogue un numéro d'identification de modèle qui est conservé dans une mémoire de l'OCR 12. Les sanctions OCR déterminées dans l'étape 4 pourront également être enregistrées dans la mémoire de l'OCR 12 en relation avec le numéro d'identification d'un modèle de filante.

Dans le procédé selon l'invention, un module décisionnel de l'OCR analyse de façon récurrente la mémoire de l'OCR 12 pour détecter une filante et décide en 13 l'exécution de fonctions découlant de la détection de filantes.

Plus particulièrement, lorsque le module décisionnel a décidé en 13 que l'envoi postal courant appartient à une filante courante, il peut engager des actions 14 pour optimiser la lecture automatique d'adresse par OCR. En cas de détection qu'un envoi postal courant fait partie d'une filante, le module 13 peut également commander en 15 l'enregistrement d'informations, dans une base de données 16, sur l'envoi postal courant et éventuellement sur les envois postaux précédents appartenant aussi à cette filante courante à des fins de contrôle de ristournes gros usagers.

Un exemple de mise en oeuvre du procédé selon l'invention est donc basé sur l'utilisation des composantes connexes comme attributs d'image propres à distinguer un groupe d'envois postaux homogènes pour caractériser des filantes. De façon connue en soi, une composante connexe dans une image binaire est constituée de tous les points noirs adjacents que l'on peut associer par voisinage immédiat sans passer par un point blanc. Sur la figure 1, deux composantes connexes 17, "S" et "Raspail" (en écriture liée), concordantes respectivement, de chacun des envois postaux E de la filante F sont mises en évidence en étant encadrées chacune par un cadre en pointillé 18. L'extraction 3 des composantes connexes d'une image numérique binarisée consiste donc dans l'identification de chacune des composantes connexes dans une table de composantes connexes par plusieurs critères, par exemple par la position dans l'image du cadre rectangulaire 18 entourant la composante connexe 17, par la longueur et la largeur du cadre 18, par la densité de noir dans le cadre 18, et par le nombre de pixels connexes.
La figure 4 présente de façon plus détaillée le processus de comparaison 6 des composantes connexes de la figure 3 pour déterminer si un envoi postal courant peut être associé à un modèle du catalogue 7. A l'étape 3, toutes les composantes connexes dans l'image de l'envoi postal courant sont extraites. De toutes ces composantes connexes, on ne conserve que les plus significatives par élimination des autres à l'étape 20, par exemple on ne conserve que les cent ayant le plus grand nombre de pixels. L'élimination en 20 des composantes connexes de plus petite taille permet d'accélérer le processus de comparaison en 6 et aussi d'éliminer parfois l'adresse du destinataire qui est généralement différente sur les différents envois postaux appartenant à une filante. On compare en 21 alors chaque composante connexe discriminante de l'envoi postal courant avec chaque composante connexe discriminante de chacun des modèles. Pour cela, on procède par cascade de filtres avec les différents critères de la table de composantes connexes, un seuil de compatibilité étant donné pour chacun des critères. Par exemple, on comparera d'abord les positions des cadres entourant les composantes connexes avant de comparer en cas de succès par rapport au seuil de compatibilité choisi les longueurs et largeurs des cadres etc... Pour chacun des modèles du catalogue, on connaît à présent quelles composantes connexes et donc combien (étape 22) de composantes connexes de l'envoi postal courant concordent avec les composantes connexes d'un modèle. On conserve en 23 le modèle dont le plus grand nombre de composantes connexes concordent et on compare ce nombre par rapport à un seuil en 24 qui est par exemple de 30 composantes connexes concordantes. Si cette dernière étape de comparaison est concluante, on a détecté que l'envoi postal courant fait partie d'une filante identifiée par un modèle du catalogue 7.

La figure 5 montre plus en détail un exemple de structure du catalogue 7 illustré sur la figure 2. Le catalogue 7 est en fait un fichier structuré et comporte principalement quatre éléments d'informations pour chaque modèle 30, à savoir: un numéro d'identification 31, un ensemble de composantes connexes 32, des paramètres d'optimisation pour le réglage de l'OCR 33 et un indicateur d'intérêt pour le modèle 34.

Par ailleurs, le catalogue 7 est formé de deux parties. Une première partie 35 du catalogue qui est dynamique et dont son contenu évolue continuellement. C'est dans cette première partie 35 du catalogue 7 qu'est enregistré (créé) en 11 un nouveau modèle 30 associé à un envoi postal courant, lorsque les composantes connexes de l'envoi postal courant ne concordent 10 pas avec les composantes connexes des modèles du catalogue 7. Quand cette première partie 35 du catalogue 7 est pleine, on peut écraser un modèle 30 de cette première partie 35 pour créer 11 un nouveau modèle 30. Le modèle qui est écrasé est celui par exemple dont l'indicateur d'intérêt 34 est le plus faible. L'indicateur d'intérêt 34 d'un modèle 30 dépend de l'intérêt du modèle 30 dans le procédé selon l'invention, c'est à dire du temps écoulé depuis sa dernière reconnaissance, du nombre de fois ou il a été reconnu, s'il a engendré une décision de détection de filante, de l'utilité des paramètres OCR du modèle... L'enregistrement d'un nouveau modèle 30 dans la première partie 35 consiste à donner un numéro d'identification 31 au modèle 30. En correspondance avec ce numéro d'identification 31 sont enregistrées par exemple les cent composantes connexes 32 les plus significatives de l'envoi postal courant, les paramètres OCR 33 utilisés pour la reconnaissance automatique d'adresse de l'envoi postal courant, et l'indicateur d'intérêt 34.

En outre, lorsqu'un envoi postal courant a été reconnu comme associé 8 à un modèle 30 de la première partie 35 du catalogue 7, les éléments d'informations du modèle sont enrichis par l'envoi postal courant. Le numéro d'identification 31 du modèle 30 ne change pas pour permettre au module décisionnel de reconnaître l'association de l'envoi postal courant au modèle 30. L'ensemble de composantes connexes 32 du module est enrichi 9 avec les composantes connexes de l'envoi postal courant. Les valeurs de chacun des critères de la table de composantes connexes pour les composantes connexes de l'ensemble de composantes connexes 32 du modèle 30 concordantes avec les composantes connexes de l'envoi postal courant sont moyennées. Les composantes connexes de l'envoi postal courant ne concordant pas avec les composantes connexes du modèle sont enregistrées dans l'ensemble de composantes connexes 32 du modèle, jusqu'à ce que l'ensemble de composantes connexes contienne un nombre maximal de composantes connexes pour un modèle 30. Cet enrichissement 9 des composantes connexes du modèle 30 permet de le consolider en le rendant plus fiable et par exemple plus tolérant aux bruits sur les composantes connexes lors de la binarisation de l'image numérique. Aussi dans le modèle 30, les paramètres OCR 33 de l'envoi postal courant sont enregistrés par-dessus les anciens et l'indicateur d'intérêt 34 est mis à jour.

Dans une seconde partie 36 du catalogue, non effaçable, on enregistre initialement des modèles 30 de filantes pour des clients référencés qui ont fait l'objet d'accords commerciaux ou des modèles de filantes revenant très fréquemment et comportant un très grand nombre d'envois postaux. Une fois enregistrés dans cette seconde partie 36 du catalogue 7, les éléments d'informations des modèles 30 ne changent plus. L'ensemble 32 des composantes connexes de ces modèles est complet et ne peut plus être enrichit en composantes connexes. Les paramètres OCR 33 pour les envois postaux associés aux modèles 30 sont parfaitement bien optimisés, typiquement par échantillonnage et ne sont pas changés. Les modèles 30 de la seconde partie 36 du catalogue 7 ont des numéros d'identification 31 consécutifs. L'indicateur d'intérêt 34 est inutile. En plus des modèles 30 enregistrés initialement, des modèles 30 provenant de la première partie 35 du catalogue 7 sont enregistrés en 37 dans la seconde partie 36 du catalogue 7 lorsque ces derniers ont des paramètres OCR parfaitement bien optimisés et reviennent fréquemment, c'est à dire lorsque leurs indicateurs d'intérêt 34 ont dépassé un certain seuil. Ces modèles 30 sont enregistrés dans des espaces laissés libres de la seconde partie 36 du catalogue 7 et n'écrasent pas les modèles 30 enregistrés précédemment.

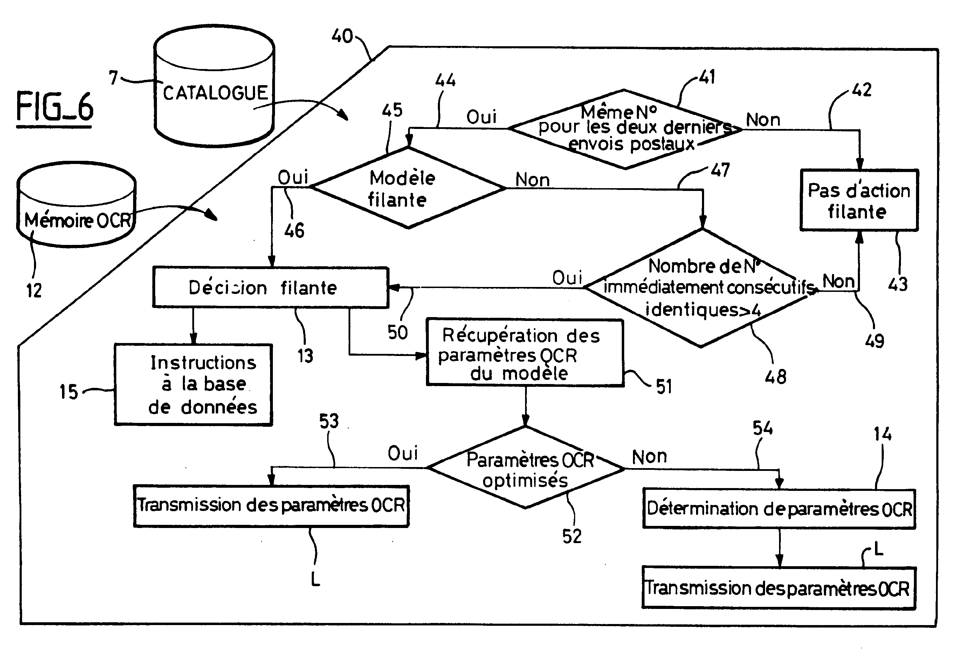

La figure 6 montre de manière détaillée les étapes de l'analyse des informations contenues dans la mémoire de l'OCR 12 et dans le catalogue 7 par un module décisionnel 40 de la machine de traitement postal pour détecter en 13 une filante, décider l'exécution de fonctions découlant du passage d'une filante, et donc de la détection d'une filante, et déterminer en 14 les actions appropriées à enclencher. Le module décisionnel 40 analyse à l'étape 41 à partir de la mémoire de l'OCR 12 les numéros d'identification 31 des modèles 30 associés aux derniers envois postaux. Si le numéro d'identification 31 du modèle associé à l'envoi postal précédent l'envoi postal courant est différent en 42 de celui du modèle associé à l'envoi postal courant, aucune action relative à une filante n'est enclenchée à l'étape 43. Dans le cas contraire en 44, une recherche à l'étape 45 dans le catalogue 7 permet de savoir si le modèle 30 associé à l'envoi postal courant est un modèle 30 de la seconde partie 36 du catalogue 7 ou si ce modèle 30 a déjà fait l'objet d'une filante. Dans l'affirmative en 46, le module décisionnel décide (détecte) à l'étape 13 que l'envoi postal courant appartient à une filante et enclenche l'exécution de fonctions découlant de la détection d'une filante. Dans la négative en 47, le module décisionnel 40 compte à l'étape 48 le nombre d'envois postaux consécutifs incluant l'envoi postal courant associés au même modèle 30. Si comme en sortie 49 ce nombre est inférieur ou égal à par exemple quatre, aucune action relative à une filante n'est enclenchée. Si comme en sortie 50 ce nombre est supérieur à quatre le module décisionnel décide à l'étape 13 que l'envoi postal courant appartient à une filante et enclenche l'exécution de fonctions découlant de la détection d'une filante.

Une fonction découlant de la détection d'une filante est le contrôle des ristournes qui passe par la transmission en 15 d'instructions à la base de données 16, de manière à ce que cette dernière récupère et enregistre, dans des fichiers identifiés par exemple par les date - heure - minute - seconde de l'enregistrement, entre autres le numéro d'identification en 31 du modèle 30 associé aux envois postaux de la filante, les sanctions OCR de tous les envois postaux de la filante et les images de quelques envois postaux de la filante, par exemple de un sur cinquante.

Une autre fonction découlant de la détection d'une filante est l'optimisation automatique des paramètres de l'OCR pour la lecture de l'adresse des envois postaux subséquents de l'envoi postal courant. Les paramètres OCR 33 enregistrés en correspondance avec le numéro d'identification 31 du modèle associé aux envois postaux de la filante sont récupérés et leur niveau d'optimisation est vérifié en 52. Si ces paramètres OCR sont parfaitement optimisés 53 (c'est le cas généralement pour les filantes des clients référencés), ils sont transmis lors du rebouclage L à l'OCR pour la lecture de l'adresse de l'envoi postal subséquent. Si ces paramètres OCR 33 ne sont pas parfaitement optimisés 54 (c'est le cas généralement des filantes dont le modèle vient d'être créé dans le catalogue), en plus des paramètres OCR 33 du catalogue 7, le module décisionnel 40 analyse les sanctions OCR et les paramètres OCR des envois postaux associés à ce modèle contenus dans la mémoire de l'OCR et détermine en 14 de nouveaux paramètres OCR pour améliorer automatiquement la reconnaissance automatique d'adresse par OCR. Les nouveaux paramètres OCR sont alors transmis lors du rebouclage L à l'OCR pour la lecture de l'envoi postal subséquent. Ces paramètres OCR seront probablement améliorés sur de nombreux envois postaux avant de permettre une reconnaissance d'adresse optimale.

Plus particulièrement, un paramètre OCR permettant d'accélérer la lecture OCR est celui concernant la distinction entre "écriture manuscrite" et "écriture dactylographiée". Après avoir localisé le bloc d'adresse et les lignes, l'unité de reconnaissance d'adresse par OCR recherche si l'écriture dans le bloc d'adresse est manuscrite ou dactylographiée. Parfois, la décision est univoque dès cette étape et le traitement inutile est arrêté mais parfois, la décision entre écriture manuscrite et dactylographiée n'est prise qu'à la fin du traitement OCR, lors de la sanction OCR. Selon l'invention, une analyse des sanctions OCR de l'envoi postal courant et des envois postaux précédents de la filante courante peut conduire à détecter que l'écriture est dactylographiée pour la filante courante et il n'est plus dans ce cas nécessaire d'effectuer la reconnaissance d'écriture manuscrite, ce qui évite des erreurs de lecture et des rejets.

Aussi, lorsque le traitement détecte que les destinataires sont les mêmes pour tous les envois postaux de la filante courante, ce qui est typiquement un cas d'erreur de localisation du bloc d'adresse par l'OCR (l'OCR lit probablement un bloc contenant l'adresse de l'expéditeur de la filante), avec l'invention, il est possible de stopper cette erreur en interdisant à l'OCR de lire le bloc d'adresse erroné et de localiser un autre bloc d'adresse dans l'image. Les sanctions OCR des envois postaux appartenant à la filante courante traités précédemment peuvent être reconsidérées et les envois postaux peuvent être redirigés dans le cas où la machine de tri est équipée d'une ligne à retard qui permet de ne pas trier instantanément un envoi postal lorsque sa sanction OCR est connue.

L'optimisation des paramètres OCR peut encore porter sur :
- la position du bloc adresse lorsque aucune adresse n'a été lue;
- les paramètres de binarisation;
- l'orientation de l'adresse sur l'envoi postal;
- la police de caractère utilisée;
- l'ordonnancement des éléments de l'adresse (code postal, ville, rue);
- le mode de traitement à utiliser, par exemple domestique ou international.

Le procédé selon l'invention décrit ci-dessus pour l'optimisation des paramètres OCR s'appuie sur la présomption que l'envoi postal subséquent appartient à la filante courante. II est aussi possible d'optimiser les paramètres OCR pour la lecture de l'adresse de l'envoi postal courant en réalisant un traitement OCR en deux passes de reconnaissance d'adresse par OCR.

Une optimisation des paramètres OCR peut aussi être effectuée de la manière décrite dans le document de brevet européen EP 1159705 en s'appuyant sur du codage vidéo. Les paramètres OCR optimisés sont alors enregistrés dans le modèle correspondant dans le catalogue en vue d'une utilisation ultérieure éventuelle.

Les informations contenues dans la base de données 12 servent à déterminer les taux de lecture des envois postaux de clients référencés afin de contrôler le respect des clauses établies dans des contrats de ristourne. Cette opération est effectuée normalement indépendamment du traitement des envois postaux, par exemple sur un ordinateur à partir des bases de données 12 maintenues en mémoire dans plusieurs machine de tri, lesquelles bases de données 12 peuvent contenir des données identifiant la machine de tri et le dépileur sur lesquels sont passées les filantes. La mise en correspondance des clients référencés avec des filantes détectées peut être directe si ces filantes ont un modèle enregistré initialement dans la seconde partie du catalogue. Dans le cas contraire, la détermination de l'expéditeur peut être effectuée par un opérateur à partir des images numériques des envois postaux des filantes, stockées dans la base de données 12.

Dans le procédé selon l'invention décrit ci-dessus, il a été introduit une notion de contexte inter envois postaux et la base de cette détection de filantes est un module qui peut comparer deux images et déterminer si elles concordent ou ne concordent pas. Cette comparaison est basée ci-dessus sur des composantes connexes comme attributs d'image propres à distinguer un groupe d'envois postaux homogènes pour détecter des filantes. Mais l'invention s'étend à d'autres types d'attributs d'image comme le positionnement et la taille des différents blocs dans l'image, la densité de noir dans l'image, la table de symboles issue d'une reconnaissance OCR. Il est possible aussi d'extraire des attributs d'une image multi - niveaux de gris ou d'utiliser les densités de couleurs sur une image numérique couleur pour constituer ces attributs d'image propres à distinguer des filantes.

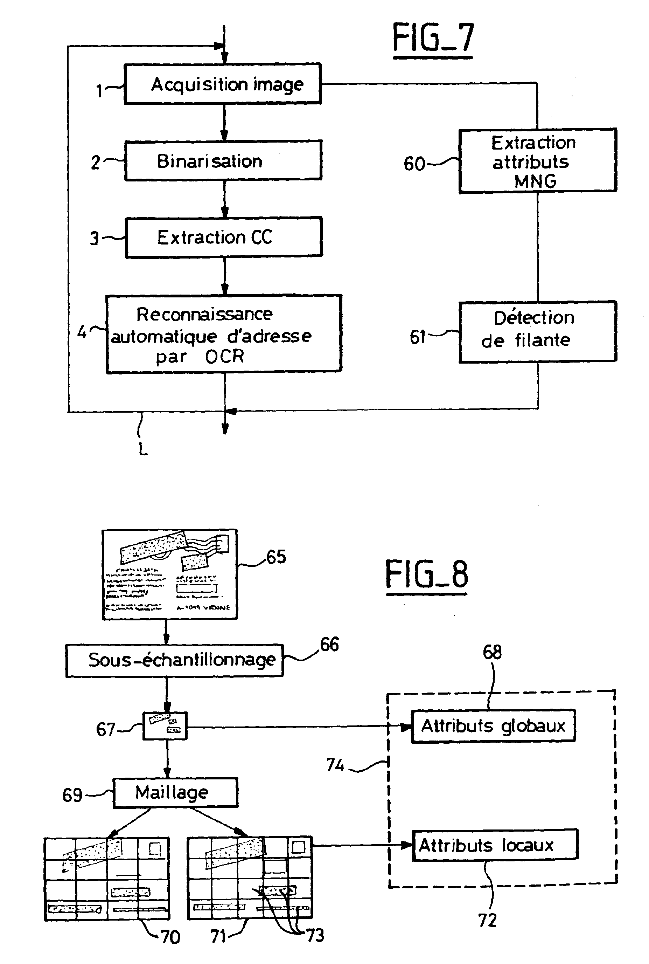

On a représenté sur la figure 7 un autre mode de mise en oeuvre du procédé selon l'invention pour détecter automatiquement des filantes dans lequel les attributs d'images propres à distinguer des filantes sont des attributs extraits d'une image multi - niveau de gris. Le processus de traitement automatique dans lequel on forme une image numérique 1 de l'envoi postal courant, on binarise en 2 cette image et on dérive en 3 de l'image binarisée des composantes connexes qui sont utilisées pour la reconnaissance automatique d'adresse 4 reste inchangé. A l'étape 60, on traite l'image numérique formée en 1 de manière à extraire des attributs d'image multi niveau de gris et on utilise ces attributs d'image multi niveau de gris pour réaliser une détection de filante en 61. La détection de filante 61 à partir des attributs d'image multi niveau de gris est réalisée tout comme la détection de filante 5 à partir des composantes connexes en parallèle à la reconnaissance d'adresse par OCR de sorte que le processus de traitement par OCR se reboucle en L pour chaque envoi subséquent avec le résultat de la détection de filante 60.

La figure 8 détaille l'extraction des attributs d'image multi niveau de gris de l'envoi postal courant réalisée à l'étape 60. L'image numérique 65 formée en 1 est une image multi niveau de gris de l'envoi postal courant. L'image 65 de l'envoi postal courant est tout d'abord sous-échantillonnée à l'étape 66 en une image multi niveau de gris basse résolution 67 de l'envoi postal courant. A partir de l'image basse résolution 67 sont extraits des attributs globaux multi niveau de gris 68. Les attributs globaux multi niveau de gris 68 sont plus particulièrement la hauteur, la largeur de l'envoi postal, le minimum, le maximum et la moyenne de la nuance de gris des pixels, la variance et l'entropie de l'image. Différents maillages sont ensuite appliqués à l'image basse résolution 67 lors de l'étape 69 pour obtenir des images maillées, par exemple une première image 70 maillée en 4*4 et une seconde image 71 maillée en 5*4 sur la figure 8. A partir des différentes images maillées 70,71, sont extraits des attributs locaux 72 multi niveau de gris qui sont en particulier le minimum, le maximum et la moyenne de la nuance de gris des pixels, ainsi que la variance et l'entropie calculés pour chaque bloc 73 du maillage de chaque image maillée 70,71. Les attributs globaux 68 avec les attributs locaux 72 multi niveau de gris de l'envoi postal courant forment les attributs d'image multi niveau de gris 74 qui servent à la détection de filante 61.

L'utilisation des attributs multi niveau de gris 74 est sensiblement identique à celle des composantes connexes. L'ensemble de composantes connexes 32 d'un modèle 34 du catalogue 7 est alors remplacé par les attributs multi niveau de gris 74. La comparaison entre les attributs multi niveau de gris d'un modèle et les attributs multi niveau de gris de l'envoi postal courant s'effectue de la manière suivante. On compare les attributs globaux de l'envoi postal courant et du modèle et on détermine par seuillage si l'envoi postal concorde avec le modèle. En cas de concordance, on compare les attributs locaux, on calcule des coefficients de corrélation entre les attributs locaux de tous les blocs correspondant deux à deux, qui sont moyennés pour donner les coefficients de corrélation moyen et médian de chaque maillage et en moyennant les coefficients de corrélation des différents maillages, on obtient un unique coefficient de corrélation entre envoi postal courant et modèle qui par seuillage indique si le modèle et l'envoi postal courant sont associés. L'enrichissement d'un modèle pour le rendre plus robuste se fait en moyennant les attributs multi niveau de gris du modèle avec ceux de l'envoi postal courant.

## Revendications

1. Procédé de traitement d'envois postaux dans lequel on forme (1) une image numérique d'un envoi postal courant comportant une information d'adresse et on réalise à partir de l'image de l'envoi postal une opération de reconnaissance automatique de ladite information d'adresse par OCR (2,34), ce procédé comprenant en outre un traitement (5) pour l'identification automatique de groupes d'envois postaux homogènes ou filantes comprenant une étape consistant à extraire (3) de l'image de l'envoi postal courant des attributs de filante propres à constituer une caractéristique distinctive d'une filante et à comparer (6) ces attributs de filante associés à l'envoi courant à des attributs de modèle de filante préenregistrés en mémoire dans un catalogue pour détecter une concordance entre lesdits attributs de filante associés à l'envoi courant et des attributs de modèle de filante associés à un modèle particulier de filante,
**caractérisé en ce que**
- en réponse à une détection de concordance, on poursuit le traitement par les étapes suivantes :
- on enrichit (9) lesdits attributs de modèle de filante associés audit modèle de filante particulier avec lesdits attributs de filante associés à l'envoi courant ;
- on enregistre des résultats de l'OCR pour l'envoi courant en correspondance avec ledit modèle de filante particulier pour générer des données de réglage optimisées de l'OCR;
- et on contrôle (28) pour ce modèle de filante particulier si une valeur de comptabilisation, indicative du nombre de fois que l'on a détecté pour des envois consécutifs précédant l'envoi courant une concordance avec les attributs de modèle de filante de ce modèle de filante particulier, est supérieure à une certaine valeur de seuil pour paramétrer le fonctionnement de l'OCR avec lesdites données de réglage optimisées associées à ce modèle de filante particulier ;
- et dans le cas où aucune concordance n'est détectée, on enregistre en mémoire dans le catalogue lesdits attributs de filante associés à l'envoi courant comme des attributs de modèle de filante associés à un nouveau modèle (11) de filante.

2. Procédé de traitement d'envois postaux selon la revendication 1, dans lequel lesdits attributs de filante générés à partir de l'image de l'envoi courant sont constitués par des composantes connexes extraites de cette image et dans lequel on classe les composantes connexes associées à l'envoi courant par nombre de pixels pour ne conserver qu'un nombre limité prédéfini de composantes connexes discrimantes (20) ayant le plus grand nombre de pixels avant de comparer ces composantes connexes discrimantes à des composantes connexes associées à des modèles particuliers de filante.

3. Procédé selon la revendication 1, dans lequel pour générer lesdits attributs de filante à partir de l'image de l'envoi courant, on transforme (66) ladite image en une image multi niveau de gris basse résolution pour extraire des attributs globaux comme par exemple les minimum-maximum-moyenne des niveaux de gris dans l'ensemble de l'image et des attributs locaux comme par exemple les minimum-maximum-moyenne des niveaux de gris pour plusieurs partitions différentes de l'image.

4. Procédé selon l'une des revendications 1 à 3, dans lequel les données de réglage comprennent une donnée indicative d'un fonctionnement de l'OCR pour une reconnaissance d'écriture manuscrite ou pour une reconnaissance d'écriture dactylographiée.

5. Procédé selon l'une des revendications 1 à 3, dans lequel les données de réglage comprennent des données indicatives de la position de l'information d'adresse sur l'envoi et/ou de l'orientation de l'information d'adresse sur l'envoi et/ou de la police de caractères de l'information d'adresse sur l'envoi.

6. Procédé selon l'une des revendications précédentes, dans lequel si on identifie qu'un envoi postal courant fait partie d'une filante, on enregistre dans une base de données (16) l'image numérique de l'envoi postal courant avec les résultats de l'OCR en vue d'effectuer un contrôle du taux de lecture pour la filante.

## Claims

1. A method of handling mail items, which method comprises forming (1) a digital image of a current mail item including address information, and performing an automatic recognition operation by OCR (2, 3, 4) of said address information from the mail item image, said method further comprising processing (5) for automatically identifying groups of uniform mail items or "runs", which processing comprises a step consisting in extracting (3) "run" attributes from the image of the current mail item, which attributes are suitable for a distinguishing characteristic of a "run" and comparing (6) these "run" attributes associated with the current item with "run" model attributes which are prerecorded in a memory in a catalogue for detecting a match between said "run" attributes associated with the current item and "run" model attributes associated with a particular "run" model,
**characterized in that** in response to matching detection, method continues by following steps :
- enriching (9) said "run" model attributes associated with said particular "run" model with said "run" attributes associated with the current item;
- recording OCR results for current item in correspondence with said particular "run" model in order to generate OCR optimized adjustment data;
- checking (28) for this particular "run" model whether a counting value, indicating number of matching detection for consecutive items preceding current item with "run" model attributes of this particular "run" model, is greater than a certain threshold value for parametering the operating of OCR with said optimized adjusting data associated to this particular "run" model;
- and in case no matching is detected, recording in memory in the catalogue said "run" attributes associated with current item as "run" model attributes associated with a new "run" model (11).

2. A method according to claim 1, in which "run" attributes generated from current item image are constituted by closely related components extracted from this image and in which closely related components associated with current item are ordered by number of pixels for only keeping a limited number predefined of discriminating closely related components (20) having the largest number of pixels before comparing these discriminating closely related components with closely related components associated with particular "run" models.

3. A method according to claim 1, in which for generating said "run" attributes from current item image, the method comprises transforming (66) said image in a low resolution gray scale image to extract global attributes such as minimum-maximum-mean of gray scale in the whole image and local attributes such as minimum-maximum-mean of gray scale for several different partitions of the image.

4. A method according to one of claims 1-3, in which adjustment data comprise data indicating OCR function for a "handwritten" or "typed" text recognition.

5. A method according to one of claims 1-3, in which adjustment data comprise data indicating address information position on the item and/or address information orientation on the item and/or character font address information on the item.

6. A method according to any preceding claim, in which if a current mail item is identified as belonging to a run, the method comprises recording the digital image of the current mail item in a database (16) with the results of the OCR address recognition operation for the purpose of checking the rate of reading for the "run".

## Patentansprüche

1. Verfahren zur Behandlung von Postsendungen, in welchem ein Digitalbild einer aktuellen Postsendung, die eine Adresseninformation umfasst, gebildet wird (1), und ausgehend vom Bild der Postsendung einen Vorgang zur automatischen Erkennung der Adressinformation durch OCR-Erkennung durchführt (2, 3, 4) wird, wobei dieses Verfahren außerdem eine Behandlung (5) zur automatischen Identifizierung von Gruppen homogener Postsendungen oder Massenpostsendungen umfasst, das einen Schritt, bestehend aus Gewinnen von Merkmalen der Massenpostsendung (3) aus dem Bild der aktuellen Postsendung umfasst, die geeignet sind, ein Unterscheidungsmerkmal einer Massenpostsendung zu bilden, und Vergleichen dieser mit der aktuellen Sendung verbundenen Merkmale der Massenpostsendung mit von vorher in einem Speicher in einem Katalog erfassten Merkmalen von Mustern von Massenpostsendungen, um eine Übereinstimmung zwischen dem mit der aktuellen Sendung verbundenen Merkmal der Massenpostsendung und dem Mustermerkmal einer Massenpostsendung festzustellen, die mit einem besonderen Muster einer Massenpostsendung verbunden ist,
**dadurch gekennzeichnet,**
- **dass** in Antwort auf eine Feststellung der Übereinstimmung die Behandlung durch die folgenden Schritte fortgesetzt wird:
- Anreichern (9) der mit dem besonderen Muster der Massenpostsendung verbundenen Merkmale des Massenpostsendungsmusters mit den mit der aktuellen Sendung verbundenen Merkmalen der Massenpostsendung;
- Erfassen der Ergebnisse der OCR-Erkennung für die aktuelle Sendung in Einklang mit dem besonderen Muster der Massenpostsendung, um optimierte OCR-Erkennungs-Steuergrößen zu erzeugen; und
- Kontrollieren (28) für dieses besondere Muster einer Massenpostsendung, ob ein die Anzahl kennzeichnender Buchungswert, wobei für die der aktuellen Sendung vorangehenden aufeinander folgenden Sendungen eine Übereinstimmung mit den Merkmalen des Musters der Massenpostsendung dieses besonderen Musters der Massenpostsendung festgestellt wird, größer ist als ein bestimmter Schwellenwert, um die Durchführung der OCR-Erkennung mit den mit diesem besonderen Muster einer Massenpostsendung verbundenen optimierten Steuergrößen zu parametrieren;
- und in dem Fall, in dem keine Übereinstimmung festgestellt wird, Erfassen der mit der aktuellen Sendung verbundenen Merkmale der Massenpostsendung in einem Speicher in dem Katalog als Merkmale der Muster der Massenpostsendung, die mit einem neuen Muster (11) einer Massenpostsendung verbunden sind.

2. Verfahren zur Behandlung von Postsendungen gemäß Anspruch 1, in welchem die aus dem Bild der aktuellen Sendung erzeugten Merkmale der Massenpostsendung durch aus von diesem Bild gewonnene, zusammenhängende Bestandteile gebildet werden und in welchem die durch eine Anzahl von Pixeln mit der aktuellen Sendung verbundenen, zusammenhängenden Bestandteile klassifiziert werden, um nur eine begrenzte, vordefinierte Anzahl von zusammenhängenden, unterscheidenden Bestandteilen (20) zu erhalten, die vor dem Vergleichen dieser zusammenhängenden, unterscheidenden Bestandteile mit den mit besonderen Mustern der Massenpostsendungen verbundenen, zusammenhängenden Bestandteilen die größte Anzahl von Pixeln aufweisen.

3. Verfahren gemäß Anspruch 1, in welchem, um die Merkmale der Massenpostsendung aus dem Bild der aktuellen Sendung zu erzeugen, das Bild in ein Bild aus vielen Graustufen niedriger Auflösung umgewandelt (66) wird, um allgemeine Merkmale wie zum Beispiel Minimum, Maximum, Durchschnittswert der Graustufen in der Gesamtheit des Bildes und die lokalen Merkmale wie zum Beispiel Minimum, Maximum, Durchschnittswert der Graustufen für mehrere verschiedene Teile des Bildes zu gewinnen.

4. Verfahren gemäß einem der Ansprüche 1 bis 3, in welchem die Steuergröße indikative Daten über eine Durchführung einer OCR-Erkennung für eine Handschrifterkennung oder für eine Maschinenschrifterkennung umfassen.

5. Verfahren gemäß einem der Ansprüche 1 bis 3, in welchem die Steuergrößen indikative Daten über die Position der Adresseninformation auf der Sendung und/oder die Orientierung der Adresseninformation auf der Sendung und/oder die Schriftart der Zeichen der Adresseninformation auf der Sendung umfassen.

6. Verfahren gemäß einem der vorhergehenden Ansprüche, in welchem, wenn eine aktuelle Sendung als Teil einer Massenpostsendung identifiziert wird, das Digitalbild der aktuellen Postsendung mit den Ergebnissen der OCR-Erkennung im Hinblick auf die Durchführung einer Kontrolle der Lesewerte für die Massensendung in einer Datenbank (16) erfasst wird.
